# EUROPÄISCHE PATENTANMELDUNG

(11) **EP 4 516 167 A1**
(43) Veröffentlichungstag der Anmeldung: **05.03.2025**
(21) Anmeldenummer: 24193992.5
(22) Anmeldetag: 09.08.2024
(51) Int. Cl.: A47J 27/21, A47J 36/32

(54) **VORRICHTUNG UND VERFAHREN ZUR ERMITTLUNG DER SIEDETEMPERATUR FÜR DEN BETRIEB EINER KÜCHENMASCHINE**

(30) Priorität: 01.09.2023 DE 102023208465
(71) Anmelder: BSH Hausgeräte GmbH, 81739 München (DE)
(72) Erfinder: Brunner, Andreas, 83301 Traunreut (DE); Blischke, Daniela, 84529 Tittmoning (DE)

(57) **Zusammenfassung**

Es wird eine Vorrichtung (101) zur Ermittlung der Siedetemperatur an dem Aufstellort einer Küchenmaschine (100) beschrieben, die einen Behälter (104) und eine Temperierungseinheit (105) zum Erwärmen des Inhalts des Behälters (104), sowie einen Temperatursensor (110, 111) zum Erfassen von Temperatur-Messwerten (202) in Bezug auf die Temperatur des Inhalts des Behälters (104) umfasst. Die Vorrichtung (101) ist eingerichtet, einen Temperaturverlauf (211, 212) zu ermitteln, der eine zeitliche Sequenz von Temperatur-Messwerten (202) des Temperatursensors (110, 111) umfasst, die während eines Betriebsprogramms der Küchenmaschine (100) erfasst wurden. Die Vorrichtung (101) ist ferner eingerichtet, die Siedetemperatur an dem Aufstellort der Küchenmaschine (100) auf Basis des Temperaturverlaufs (211, 212) zu ermitteln.

## Beschreibung

Die Erfindung betrifft eine Vorrichtung und ein entsprechendes Verfahren zur Ermittlung des Siedepunktes und/oder der Siedetemperatur einer Flüssigkeit, insbesondere von Wasser, an dem Aufstellort einer Küchenmaschine.

Eine Küchenmaschine umfasst einen Behälter, der ein Nahrungsmittel aufnehmen kann, um das Nahrungsmittel innerhalb des Behälters zu verarbeiten. Im Rahmen der Verarbeitung des Nahrungsmittels kann eine Temperierung (insbesondere ein Aufwärmen) des Inhalts erfolgen.

Das vorliegende Dokument befasst sich mit der technischen Aufgabe, eine besonders präzise und effiziente Temperierung eines Nahrungsmittels in dem Behälter einer Küchenmaschine zu ermöglichen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt wird eine Vorrichtung zur Ermittlung der Siedetemperatur (von Wasser) an dem Aufstellort einer Küchenmaschine beschrieben. Die Küchenmaschine umfasst einen Behälter und eine Temperierungseinheit zum Erwärmen des Inhalts des Behälters, sowie einen Temperatursensor zum Erfassen von Temperatur-Messwerten in Bezug auf die Temperatur des Inhalts des Behälters. Die Vorrichtung kann Teil der Küchenmaschine sein. Alternativ kann die Vorrichtung Teil eines externen Backends (z.B. eines Servers) sein, der ausgebildet ist, über eine Kommunikationsverbindung Daten mit der Küchenmaschine auszutauschen.

Die Vorrichtung ist eingerichtet, einen Temperaturverlauf zu ermitteln, der eine zeitliche Sequenz von Temperatur-Messwerten des Temperatursensors umfasst, die während eines Betriebsprogramms der Küchenmaschine erfasst wurden. Die Vorrichtung kann insbesondere eingerichtet sein, einen Temperaturverlauf zu ermitteln, der während eines Betriebsprogramms der Küchenmaschine erfasst wurde, das darauf ausgelegt ist, Wasser in dem Behälter zum Kochen zu bringen und/oder (für einen bestimmten Zeitraum, etwa 1 Minute oder mehr, oder 5 Minuten oder mehr) am Kochen zu halten.

Die Vorrichtung ist ferner eingerichtet, die Siedetemperatur an dem Aufstellort der Küchenmaschine auf Basis des Temperaturverlaufs zu ermitteln.

Der Temperaturverlauf kann 10 oder mehr, insbesondere 100 oder mehr, insbesondere 1000 oder mehr, Temperatur-Messwerte für eine entsprechende Sequenz von aufeinanderfolgenden Zeitpunkten aufweisen. Der Temperaturverlauf kann z.B. zumindest einen Temperatur-Messwert pro Sekunde aufweisen. Der Temperaturverlauf kann einen ersten Abschnitt aufweisen, in dem die Temperatur-Messwerte ansteigen (während das Wasser in dem Behälter erhitzt wird). Des Weiteren kann der Temperaturverlauf einen zweiten (abgeflachten) Abschnitt aufweisen, in dem die Temperatur-Messwerte im Wesentlichen konstant bleiben (weil das Wasser kocht und am Kochen gehalten wird). Die Siedetemperatur kann in präziser Weise (ggf. allein) auf Basis der Temperatur-Messwerte des zweiten (abgeflachten) Abschnitts des Temperaturverlaufs ermittelt werden.

Die Vorrichtung kann ferner eingerichtet sein, zu bewirken, dass die Küchenmaschine, insbesondere die Temperierungseinheit der Küchenmaschine, in Abhängigkeit von der ermittelten Siedetemperatur betrieben wird. Insbesondere können ein oder mehrere Betriebsprogramme in Abhängigkeit von der ermittelten Siedetemperatur betrieben werden.

Die beschriebene Vorrichtung ermöglicht es, die Siedetemperatur in präziser und automatischer Weise zu ermitteln. So können die Garqualität und die Energieeffizienz der Küchenmaschine in zuverlässiger Weise erhöht werden.

Die Vorrichtung kann eingerichtet sein, die ermittelte Siedetemperatur mit einer gespeicherten Siedetemperatur zu vergleichen, die in einer Speichereinheit der Küchenmaschine gespeichert ist. Es kann bewirkt werden, dass die ermittelte Siedetemperatur anstelle der gespeicherten Siedetemperatur in der Speichereinheit gespeichert wird, wenn die ermittelte Siedetemperatur um mehr als einen vordefinierten Abweichungs-Schwellenwert (z.B. um mehr als 5%) von der gespeicherten Siedetemperatur abweicht. Die aktualisierte, gespeicherte Siedetemperatur kann dann für einen zuverlässigen und effizienten Betrieb der Küchenmaschine verwendet werden.

Die Vorrichtung kann eingerichtet sein, die Siedetemperatur anhand einer machine-learning-basierten Ermittlungseinheit auf Basis des ermittelten Temperaturverlaufs zu ermitteln. Die Ermittlungseinheit kann z.B. ein im Vorfeld angelerntes neuronales Netz aufweisen. Die Ermittlungseinheit kann ausgebildet sein, als Eingangsdaten den Temperaturverlauf aufzunehmen und als Ausgangsdaten die Siedetemperatur bereitzustellen. Durch die Verwendung einer machine-learning-basierten Ermittlungseinheit kann die Siedetemperatur in besonders präziser Weise ermittelt werden, um die Energieeffizienz und die Garqualität der Küchenmaschine weiter zu erhöhen.

Die Vorrichtung kann eingerichtet sein, auf Basis von Rezeptdaten für ein Gericht, das in dem Behälter der Küchenmaschine hergestellt wird, einen Abschnitt des Betriebsprogramms zur Herstellung des Gerichts zu identifizieren, bei dem Wasser in dem Behälter durch die Temperierungseinheit zum Kochen gebracht und daraufhin (für eine bestimmte Zeitdauer, etwa 1 Minute oder mehr, oder 5 Minuten oder mehr) am Kochen gehalten wird. Die Küchenmaschine kann ausgebildet sein, ein geführtes Herstellen von Kochgerichten zu ermöglichen (anhand von Rezeptdaten). Die Rezeptdaten für ein Rezept können angeben, dass in einem Abschnitt des Kochprozesses Wasser in dem Behälter zum Kochen gebracht und am Kochen gehalten wird. Es kann dann in dedizierter Weise für diesen Abschnitt der Temperaturverlauf ermittelt werden. Insbesondere kann bewirkt werden, dass der Temperaturverlauf für den identifizierten Abschnitt des Betriebsprogramms erfasst wird.

Die Vorrichtung kann ferner eingerichtet sein, die Siedetemperatur an dem Aufstellort der Küchenmaschine (ggf. allein und/oder ausschließlich) auf Basis des Temperaturverlaufs für den identifizierten Abschnitt des Betriebsprogramms zu ermitteln.

Es kann somit während des Nutzbetriebs der Küchenmaschine ein Betriebsprogramm identifiziert werden, das sich dazu eignet, die Siedetemperatur zu ermitteln. So kann die Siedetemperatur in besonders effizienter und komfortabler Weise ermittelt werden.

Die Vorrichtung kann eingerichtet sein, den Nutzer der Küchenmaschine zu veranlassen, insbesondere über die Benutzerschnittstelle der Küchenmaschine, ein (dediziertes) Siedepunkt-Betriebsprogramm zu starten. Im Rahmen des Siedepunkt-Betriebsprogramms kann der Nutzer aufgefordert werden, Wasser in den Behälter zu füllen. Das Wasser kann dann durch die Temperierungseinheit zum Kochen gebracht und daraufhin (für eine bestimmte Zeitdauer) am Kochen gehalten werden.

Die Vorrichtung kann eingerichtet sein, zu bewirken, dass der Temperaturverlauf während des Siedepunkt-Betriebsprogramms erfasst wird. Die Siedetemperatur an dem Aufstellort der Küchenmaschine kann dann in besonders präziser Weise (ggf. allein und/oder ausschließlich) auf Basis des Temperaturverlaufs ermittelt werden, der während des (dedizierten) Siedepunkt-Betriebsprogramms erfasst wurde.

Die Vorrichtung kann eingerichtet sein, den abgeflachten (zweiten) Bereich des Temperaturverlaufs zu identifizieren, in dem die Temperatur-Messwerte des Temperatursensors um höchstens eine Grenzabweichung, insbesondere um höchstens 10%, voneinander abweichen. Die Siedetemperatur kann dann (ggf. allein und/oder ausschließlich) auf Basis der Temperatur-Messwerte aus dem abgeflachten Bereich des Temperaturverlaufs, insbesondere auf Basis des Mittelwertes der Temperatur-Messwerte aus dem abgeflachten Bereich des Temperaturverlaufs, ermittelt werden.

Alternativ oder ergänzend kann die Vorrichtung eingerichtet sein, einen Zeitpunkt und/oder einen Temperatur-Messwert des Temperaturverlaufs zu identifizieren, ab dem der Anstieg des Temperaturverlaufs beendet ist und/oder an dem der Temperaturverlauf einen Knick aufweist. Die Siedetemperatur kann dann (ggf. allein und/oder ausschließlich) auf Basis von Temperatur-Messwerten des Temperaturverlaufs ab dem identifizierten Zeitpunkt und/oder ab dem identifizierten Temperatur-Messwert, insbesondere auf Basis des Mittelwertes der Temperatur-Messwerte des Temperaturverlaufs ab dem identifizierten Zeitpunkt und/oder ab dem identifizierten Temperatur-Messwert, ermittelt werden.

Die Siedetemperatur kann somit in besonders präziser Weise auf Basis der Temperatur-Messwerte ermittelt werden, die dem Abschnitt des Temperaturverlaufs entsprechen, in dem das Wasser kocht.

Die Vorrichtung kann eingerichtet sein, einen ersten Temperaturverlauf zu ermitteln, der eine zeitliche Sequenz von Temperatur-Messwerten eines ersten Temperatursensors umfasst, die während des Betriebsprogramms der Küchenmaschine erfasst wurden. Die Vorrichtung kann ferner eingerichtet sein, einen zweiten Temperaturverlauf zu ermitteln, der eine zeitliche Sequenz von Temperatur-Messwerten eines zweiten Temperatursensors umfasst, die während des Betriebsprogramms der Küchenmaschine erfasst wurden. Der erste Temperatursensor kann ein Widerstands-basierter Temperatursensor, insbesondere ein positive-temperature-coefficient (PTC) Temperatursensor, sein. Alternativ oder ergänzend kann der zweite Temperatursensor ein Infrarot (IR)-basierter Temperatursensor sein.

Die Siedetemperatur an dem Aufstellort der Küchenmaschine kann in besonders präziser Weise auf Basis des ersten Temperaturverlaufs und auf Basis des zweiten Temperaturverlaufs ermittelt werden.

Die Vorrichtung kann insbesondere eingerichtet sein, auf Basis des ersten Temperaturverlaufs einen Zeitpunkt zu identifizieren, ab dem der Anstieg des ersten Temperaturverlaufs beendet ist und/oder ab dem der erste Temperaturverlauf einen vordefinierten Temperatur-Schwellenwert erreicht und/oder überschreitet und/oder an dem der erste Temperaturverlauf einen Knick aufweist. Die Siedetemperatur kann dann in besonders präziser Weise (ggf. allein und/oder ausschließlich) auf Basis von Temperatur-Messwerten des zweiten Temperaturverlaufs ab dem identifizierten Zeitpunkt, insbesondere auf Basis des Mittelwertes der Temperatur-Messwerte des zweiten Temperaturverlaufs ab dem identifizierten Zeitpunkt, ermittelt werden.

Die Vorrichtung kann eingerichtet sein, ein oder mehrere weitere Geräte zu identifizieren, die in einem bestimmten Umfeld der Küchenmaschine angeordnet sind. Dies kann z.B. anhand von Geofencing und/oder anhand eines lokalen Kommunikationsnetzwerks (z.B. WLAN) erkannt werden. Die Vorrichtung kann ferner eingerichtet sein, den ein oder mehreren identifizierten Geräten über eine Kommunikationsverbindung die ermittelte Siedetemperatur bereitzustellen. So kann die Betriebsgüte der ein oder mehreren Geräte in effizienter Weise verbessert werden.

Die Vorrichtung kann eingerichtet sein, zu bewirken, dass der Temperatursensor auf Basis der ermittelten Siedetemperatur kalibriert wird. Die Siedetemperatur kann z.B. an einem ersten Zeitpunkt ermittelt und in der Speichereinheit gespeichert worden sein. Nach einer bestimmten Betriebsdauer der Küchenmaschine kann es zu einer Änderung der Temperaturerfassung des Temperatursensors gekommen sein (z.B. aufgrund von Alterungseffekten). Es kann dann an einem zweiten Zeitpunkt (der um die bestimmte Betriebsdauer auf den ersten Zeitpunkt folgt) eine Kalibrierung des Temperatursensors durchgeführt werden, bei der die gespeicherte Siedetemperatur als Referenz verwendet wird, um einen Offset für den Temperatursensor zu ermitteln. Die Temperatur-Messwerte des Temperatursensors können dann um den ermittelten Offset korrigiert werden.

Beispielsweise kann an dem zweiten Zeitpunkt ein Kalibrierungs-Betriebsprogramm durchgeführt werden, bei dem der Nutzer aufgefordert wird, Wasser in den Behälter zu füllen, und bei der das Wasser zu Kochen gebracht und (für die bestimmte Zeitdauer) am Kochen gehalten wird. Während des Kalibrierungs-Betriebsprogramms kann anhand des Temperatursensors ein Temperaturverlauf erfasst werden. Des Weiteren kann basierend auf diesem Temperaturverlauf die Siedetemperatur des Wassers ermittelt werden (wie in diesem Dokument beschrieben). Diese ermittelte Siedetemperatur kann mit der (am ersten Zeitpunkt ermittelten und gespeicherten) Siedetemperatur verglichen werden, um den Temperatursensor zu kalibrieren, insbesondere um den Offset für den Temperatursensor zu ermitteln. So können die Garqualität und die Energieeffizienz während der gesamten Betriebsdauer der Küchenmaschine beibehalten werden.

Gemäß einem Aspekt wird eine Küchenmaschine (insbesondere eine Küchenmaschine mit Kochfunktion) beschrieben. Die Küchenmaschine kann ausgebildet sein, um auf eine Arbeitsplatte einer Küche gestellt zu werden. Die Küchenmaschine umfasst einen Behälter zur Aufnahme eines Nahrungsmittels. Der Behälter kann z.B. eine Kapazität von 2 Litern oder mehr, oder von 3 Litern oder mehr aufweisen.

Des Weiteren umfasst die Küchenmaschine zumindest einen Temperatursensor (z.B. einen ersten und/oder einen zweiten Temperatursensor), der eingerichtet ist, Temperaturdaten in Bezug auf die Temperatur des Behälters und/oder des Nahrungsmittels zu erfassen. Der Temperatursensor kann einen temperaturabhängigen Messwiderstand (PTC) und/oder einen Infrarot (IR) Sensor umfassen. Der Temperatursensor kann an der Unterseite und/oder an einer Seitenwand des Behälters angeordnet sein.

Des Weiteren umfasst die Küchenmaschine eine Temperierungseinheit (insbesondere mit einem Heizelement), die eingerichtet ist, den Behälter und/oder das Nahrungsmittel von zumindest einer Seite des Behälters her (insbesondere von der Unterseite oder von dem Boden des Behälters her) zu temperieren (insbesondere zu erwärmen oder zu erhitzen). Außerdem umfasst die Küchenmaschine die in diesem Dokument beschriebene Vorrichtung.

Gemäß einem weiteren Aspekt wird ein Verfahren zur Ermittlung der Siedetemperatur (von Wasser) an dem Aufstellort einer Küchenmaschine beschrieben, die einen Behälter und eine Temperierungseinheit zum Erwärmen des Inhalts des Behälters, sowie einen Temperatursensor zum Erfassen von Temperatur-Messwerten in Bezug auf die Temperatur des Inhalts des Behälters umfasst.

Das Verfahren umfasst das Ermitteln eines Temperaturverlaufs, der eine zeitliche Sequenz von Temperatur-Messwerten des Temperatursensors umfasst, die während eines Betriebsprogramms der Küchenmaschine erfasst wurden. Des Weiteren umfasst das Verfahren das Ermitteln der Siedetemperatur an dem Aufstellort der Küchenmaschine auf Basis des Temperaturverlaufs.

Es ist zu beachten, dass jegliche Aspekte des in diesem Dokument beschriebenen Verfahrens und/oder der beschriebenen Vorrichtung in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
Figur 1a ein Blockdiagramm einer beispielhaften Küchenmaschine;
Figur 1b eine Küchenmaschine in einer perspektivischen Ansicht;
Figur 1c die Basis einer Küchenmaschine ohne Behälter;
Figur 2 beispielhafte zeitliche Verläufe der Temperatur des Behälters der Küchenmaschine; und
Figur 3 ein Ablaufdiagramm eines beispielhaften Verfahrens zur Ermittlung des Siedepunktes für den Betrieb einer Küchenmaschine.

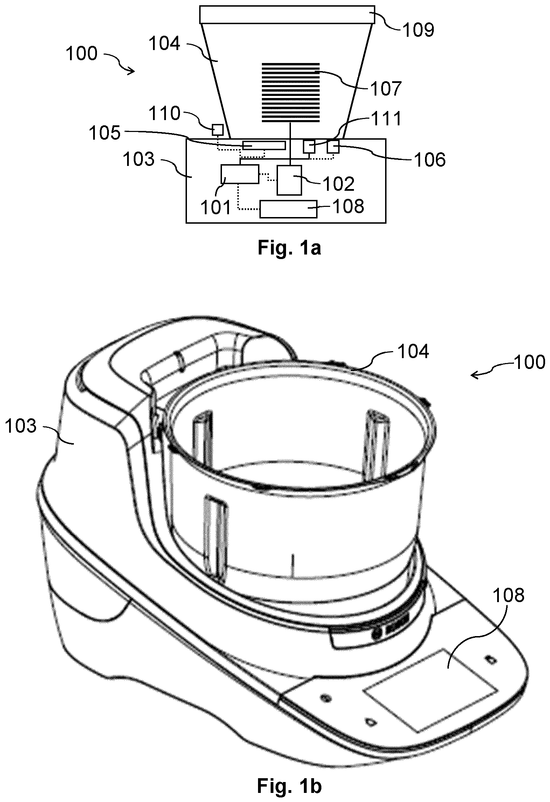

Wie eingangs dargelegt, befasst sich das vorliegende Dokument damit, eine effiziente und präzisen Temperierung eines Nahrungsmittels in einer Küchenmaschine zu ermöglichen. In diesem Zusammenhang zeigt Fig. 1a eine beispielhafte Küchenmaschine 100. Die in Fig. 1a dargestellte Küchenmaschine 100 umfasst einen Behälter 104, der auf einer Basis 103 der Küchenmaschine 100 angeordnet ist und in dem Zutaten für ein herzustellendes Nahrungsmittel verarbeitet werden können, z.B. mittels eines Werkzeugs bzw. Einsatzes 107, das bzw. der ggf. durch einen Motor 102 angetrieben wird. Dabei können ggf. unterschiedliche Werkzeuge 107 (z.B. ein Messer, ein Knethaken oder ein Besen oder ein Rühr-Werkzeug) an dem Motor 102 montiert werden. Die Küchenmaschine 100 kann eingerichtet sein, den Behälter 104 mittels einer Temperierungseinheit 105 (z.B. einer Kühleinheit oder einer Heizeinheit) zu temperieren, z.B. zu kühlen (Kühleinheit) oder zu erwärmen (Heizeinheit).

Des Weiteren kann die Küchenmaschine 100 ein oder mehrere Sensoren 106, 111 umfassen, die eingerichtet sind, Sensordaten in Bezug auf die Küchenmaschine 100 (insbesondere in Bezug auf den Zustand der Küchenmaschine 100) und/oder in Bezug auf das herzustellende Nahrungsmittel zu erfassen. Ein beispielhafter Sensor ist ein Basis-Temperatursensor 111, der eingerichtet ist, Temperaturdaten in Bezug auf die Temperatur des Behälters 104 und/oder des darin enthaltenen Nahrungsmittels zu erfassen. Der Basis-Temperatursensor 111 kann einen temperaturabhängigen Messwiderstand umfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen.

Außerdem kann die Küchenmaschine 100 eine Benutzerschnittstelle 108 umfassen, die es einem Nutzer ermöglicht, Steuereingaben an die Küchenmaschine 100 zu tätigen (z.B. über ein oder mehrere Bedienelemente), und/oder die es der Küchenmaschine 100 ermöglicht, Rückmeldungen an den Nutzer der Küchenmaschine 100 auszugeben (z.B. über einen Bildschirm und/oder über eine Anzeige). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst die Küchenmaschine 100 eine Steuereinheit bzw. eine Steuer-Vorrichtung 101, die eingerichtet sein kann, Rezeptdaten für ein Rezept zur Herstellung eines bestimmten Nahrungsmittels zu ermitteln (z.B. aus einer Speichereinheit der Küchenmaschine 100 auszulesen oder von einer Datenbank herunterzuladen). Ferner kann die (Steuer-) Vorrichtung 101 eingerichtet sein, die Küchenmaschine 100 zumindest teilweise automatisch in Abhängigkeit von den Rezeptdaten zu betreiben, um den Nutzer bei der Herstellung des bestimmten Nahrungsmittels zu unterstützen.

Die Küchenmaschine 100 kann einen Deckel 109 zum Abdecken des Behälters 104 aufweisen. Dabei kann der Deckel 109 ggf. mittels einer Riegelvorrichtung (nicht dargestellt) verriegelt werden, um bei Bedarf den Zugang zu dem Behälter 104 zu unterbinden.

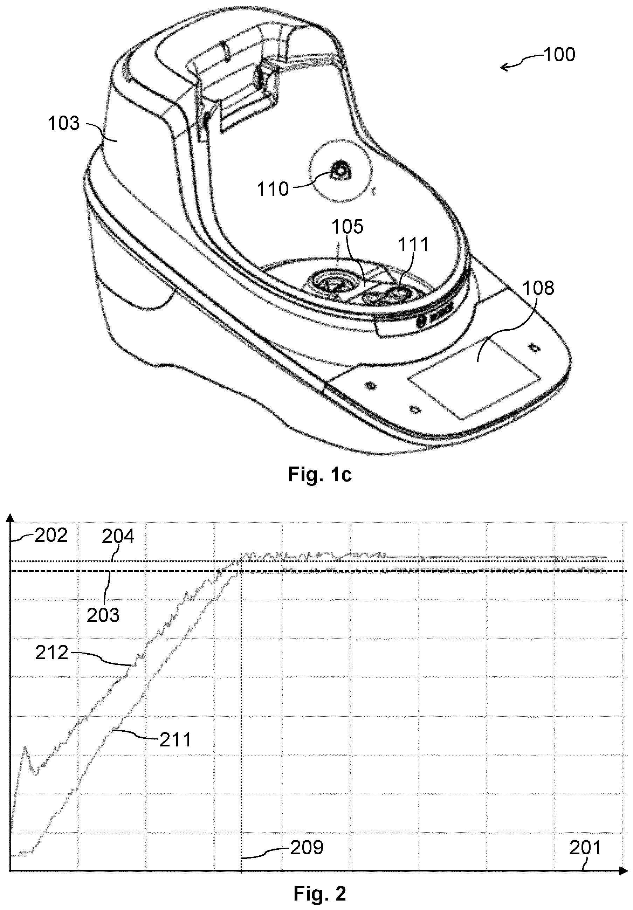

Fig. 1b zeigt eine beispielhafte Küchenmaschine 100 in einer perspektivischen Ansicht. Fig. 1c zeigt die Basis 103 einer beispielhaften Küchenmaschine 100 ohne Behälter 104.

Die Küchenmaschine 100 kann einen Infrarot (IR)-Sensor 110 (als weiteren Temperatursensor) umfassen, der eingerichtet ist, Sensordaten (d.h. Temperaturdaten) in Bezug auf die Oberfläche bzw. die Seitenwand des Behälters 104 zu erfassen. Der IR-Sensor 110 kann innerhalb der Basis 103 der Küchenmaschine 100 angeordnet und auf den Ort des (entnehmbaren) Behälters 104 gerichtet sein. Dabei kann der IR-Sensor 110 in einer bestimmten Höhe (z.B. 10mm oder mehr, oder 15mm oder mehr) vom Boden an der Seite des Behälters 104 angeordnet sein. Der IR-Sensor 110 ist eingerichtet, die von einer Oberfläche abgestrahlte (elektromagnetische) Strahlung im Infrarot-Bereich zu erfassen. Insbesondere kann dabei die Intensität der Strahlung erfasst werden. Auf Basis der erfassten Intensität der Strahlung kann auf die Temperatur der Oberfläche bzw. der Wand des Behälters 104 und basierend darauf auf die Temperatur des Inhalts des Behälters 104 geschlossen werden.

Es kann einem Nutzer bei einer Küchenmaschine 100 mit Kochfunktion ermöglicht werden, über die Benutzerschnittstelle 108 einstellen, auf welcher Höhe über dem Meeresspiegel (d.h. auf welcher Meereshöhe) sich die Küchenmaschine 108 befindet. Der Luftdruck und somit der Siedepunkt (d.h. die Siedetemperatur) von Wasser sind von der Meereshöhe abhängig. Unter Berücksichtigung der eingestellten Meereshöhe kann die Zieltemperatur für ein oder mehrere Betriebsprogramme der Küchenmaschine 100 an den Siedepunkt angepasst werden, um ein Überkochen, ein Spritzen und/oder einen unnötigen Energieverbrauch zu vermeiden. Ferner kann durch die Berücksichtigung des Siedepunkts die Garqualität der Küchenmaschine 100 erhöht werden und/oder es können die Garzeiten verkürzt werden.

Ein Betriebsprogramm kann z.B. darauf ausgerichtet sein, zunächst den Siedepunkt zu erreichen, und daraufhin ein oder mehrere weitere Aktionen durchzuführen (z.B. einen Timer zu starten). Die Güte eines derartigen Betriebsprogramms kann durch die Berücksichtigung des korrekten Siedepunkts erhöht werden.

Ferner kann die Ermittlung des korrekten Siedepunktes für eine Offset-Anpassung der Temperaturmesseinrichtungen und/oder -sensoren 110, 111 herangezogen werden. Während des Betriebs der Küchenmaschine 100 können z.B. durch Alterungseffekte der ein oder mehreren Sensoren 110, 111 und/oder der verwendeten Wärmeleitpaste, und/oder durch Änderung der Anpresskraft der ein oder mehreren Sensoren 110, 111 Temperaturabweichungen auftreten, die sich nachteilig auf den Betrieb der Küchenmaschine 100 auswirken können.

Wenn die Siedetemperatur bekannt ist, kann im Rahmen eines Kalibrierungs-Betriebsprogramms bewirkt werden, dass Wasser in dem Behälter 104 zum Kochen gebracht wird (und ggf. am Kochen gehalten wird). Während des Kalibrierungs-Betriebsprogramms können anhand eines Temperatursensors 110, 111 der Küchenmaschine 110 Temperartur-Messwerte erfasst werden. Insbesondere kann der Temperaturverlauf während des Erhitzens des Wassers ermittelt werden. Der Temperaturverlauf weist typischerweise einen Knick auf, wenn das Wasser zu Kochen beginnt. Ab dem Knick und/oder ab diesem Zeitpunkt sollte die von den Temperatur-Messwerten angezeigte Temperatur der Siedetemperatur entsprechen. Die Abweichung zwischen der von den Temperatur-Messwerten angezeigten Temperatur und der (gespeicherten) Siedetemperatur kann als Offset zur Kalibrierung des Temperatursensors 110, 111 verwendet werden.

Die Einstellung der Meereshöhe und/oder der Siedetemperatur kann von dem Nutzer manuell über die Benutzerschnittstelle 108 durchgeführt werden. Die Eingabe kann ggf. fehlerhaft sein oder gänzlich vergessen werden, was sich nachteilig auf den Betrieb der Küchenmaschine 100 auswirken kann. In diesem Dokument werden eine Vorrichtung 101 und ein Verfahren beschrieben, die es ermöglichen, die Siedetemperatur automatisch und in präziser Weise zu ermitteln. So kann eine falsche oder fehlende Einstellung des Siedepunkts erkannt und korrigiert werden.

Bei einer Küchenmaschine 100 mit Kochfunktion kann der Nutzer anhand von Rezeptdaten für ein Rezept und/oder für ein Kochprogramm über die Benutzerschnittstelle 108 durch einen bestimmten Kochprozess geführt werden. Durch diese Führung ist der Küchenmaschine 100 bekannt, welche Zutaten bei der Ausführung des Kochprogramms und/oder des Rezeptes in dem Behälter 104 der Küchenmaschine 100 sein sollten.

Die Vorrichtung 101 der Küchenmaschine 100 kann eingerichtet sein, auf Basis der Rezeptdaten für einen Kochprozess zu erkennen, dass in einem bestimmten Abschnitt des Kochprogramms
- Wasser in dem Behälter 104 angeordnet ist;
- das Wasser zum Kochen gebracht werden soll (d.h. dass die Temperatur des Wassers bis zu dem Siedepunkt erhöht werden soll); und
- auch nach Erreichen des Siedepunktes dem Wasser weiterhin Heizleistung über das Temperierungselement 105 zugeführt werden soll (um das Wasser am Kochen zu halten).

Basierend darauf kann geschlossen werden, dass sich die Temperatur des Behälters 104 und/oder des Inhalts des Behälters 104 (d.h. insbesondere des Wassers) während des bestimmten Abschnitts des Kochprogramms auf den Siedepunkt von Wasser an dem Aufstellort der Küchenmaschine 100 einpendeln wird.

Durch die Auswertung der Temperaturkurve (d.h. des Temperaturverlaufs) des Kochprogramms (insbesondere des bestimmten Abschnitts des Kochprogramms) kann somit die Siedetemperatur ermittelt werden. Die ermittelte Siedetemperatur kann von der Küchenmaschine 100 übernommen werden (z.B. automatisch oder nach Bestätigung durch den Nutzer der Küchenmaschine 100).

Alternativ oder ergänzend kann der Nutzer (etwa bei der Inbetriebnahme der Küchenmaschine 100) ein dediziertes Siedepunkt-Betriebsprogramm auszuführen. Der Nutzer kann über die Benutzerschnittstelle 108 aufgefordert werden, Wasser in den Behälter 104 zu füllen. Das Wasser kann daraufhin erhitzt werden, und es kann anhand der ein oder mehreren Temperatursensoren 110, 111 der Temperaturverlauf während des Erhitzungsvorgangs erfasst werden. Basierend auf dem Temperaturverlauf kann die Siedetemperatur des Wassers ermittelt werden.

Fig. 2 zeigt beispielhafte Temperaturverläufe 211, 212, die jeweils Messwerte 202 der Temperatur als Funktion der Zeit 201 angeben. Es kann z.B. anhand des ersten Temperatursensors 111 (z.B. anhand des Widerstands-basierten Temperatursensors) ein erster Temperaturverlauf 211 ermittelt werden, und es kann anhand des zweiten Temperatursensors 110 (z.B. anhand des IR-basierten Temperatursensors) ein zweiter Temperaturverlauf 212 ermittelt werden. Auf Basis des ersten Temperaturverlaufs 211 kann z.B. erkannt werden, dass ab einem bestimmten Zeitpunkt 209 die Temperatur-Messwerte 202 im Wesentlichen konstant bleiben (z.B. bei einem ersten (mittleren) Temperaturwert 203). Ab diesem Zeitpunkt 209 können die Temperatur-Messwerte 202 des zweiten Temperaturverlaufs 212 gemittelt werden, um einen zweiten Temperaturwert 204 zu ermittelt, der z.B. der Siedetemperatur entspricht.

Es kann somit eine Mittelwertbildung der Temperatur-Messwerte 202 der IR Sensor Kurve 212 durchgeführt werden (ab dem Zeitpunkt 209, ab dem die Kurve 212 nicht mehr steigt), um die Siedetemperatur zu ermitteln,

Alternativ oder ergänzend kann eine im Vorfeld angelernte Ermittlungseinheit (z.B. eine auf künstlicher Intelligenz (KI) basierende Ermittlungseinheit) dazu verwendet werden, aus einem Temperaturverlauf 211, 212 die Siedetemperatur zu ermitteln. Die Ermittlungseinheit kann im Vorfeld auf Basis von Trainingsdaten und unter Verwendung von maschinellem Lernen angelernt worden sein. Die Trainingsdaten können eine Vielzahl von Trainings-Datensätzen umfassen, wobei ein Trainings-Datensatz jeweils einen Temperaturverlauf 211, 212 und die tatsächliche Siedetemperatur an dem jeweiligen Aufstellort angibt.

Der Nutzer kann aufgefordert werden, über die Benutzerschnittstelle 108 eine bestimmte Zieltemperatur (z.B. 100°) für ein Kochprogramm (z.B. Dämpfen) und/oder für das Siedepunkt-Programm einzustellen. Beim Dämpfen wird auch nach Erreichen des Siedepunkts noch Heizleistung zugeführt. Es kann während des Programms der Temperaturverlauf 211, 212 erfasst werden, und es kann basierend darauf die Siedetemperatur ermittelt werden.

Ggf. können im Rahmen von mehreren Programmen mehrere Messungen der Siedetemperatur durchgeführt werden. Wenn sich die Messungen der Siedetemperatur jeweils bestätigen, so kann die ermittelte Siedetemperatur automatisch oder nach Rückfrage des Nutzers in der Speichereinheit der Küchenmaschine 100 gespeichert und für den Betrieb der Küchenmaschine 100 verwendet werden.

Die Auswertung der ein oder mehreren Temperaturverläufe 211, 212 kann direkt innerhalb der Küchenmaschine 100 durchgeführt werden. Die Steuer-Vorrichtung 101 der Küchenmaschine 100 erfasst die Temperatur-Messwerte 202, ermittelt die Siedetemperatur und korrigiert den Siedepunkt oder weißt den Nutzer an, den Siedepunkt anzupassen.

Alternativ oder ergänzend können die ein oder mehreren Temperaturverläufe 211, 212 der Küchenmaschine 100 aufgezeichnet und an ein Backend (z.B. an einen Server) übertragen (insbesondere gesendet) werden. Es kann daraufhin durch den Backend die Siedetemperatur ermittelt werden. Wird bei der Auswertung eine fehlerhafte Einstellung der Siedetemperatur der Küchenmaschine 100 erkannt, kann der Nutzer über eine Benutzerschnittstelle (z.B. über eine Benutzerschnittstelle eines Anwendergeräts, etwa eines Smartphones, des Nutzers) aufgefordert werden, die Einstellung zu korrigieren. Alternativ oder ergänzend kann das Backend eine automatische Korrektur der Einstellung auslösen und ggf. den Nutzer über die Änderung der Einstellung informieren.

Die Vorrichtung 101 der Küchenmaschine 100 und/oder das Backend können ausgebildet sein, ein oder mehrere weitere Geräte zu ermitteln, die sich in der Nähe der Küchenmaschine 100 befinden, und die somit (voraussichtlich) auf der gleichen Meereshöhe angeordnet sind, und die somit die gleiche Siedetemperatur aufweisen. Beispielsweise können ein oder mehrere Geräte identifiziert werden, die in dem gleichen lokalen Kommunikationsnetzwerk (insbesondere WLAN) angeordnet sind. Alternativ oder ergänzend kann Geofencing verwendet werden (z.B. auf Basis der IP Adressen der Geräte), um ein oder mehrere weitere Geräte zu identifizieren, die in der Nähe der Küchenmaschine 100 angeordnet sind. Die für die Küchenmaschine 100 ermittelte Meereshöhe und/oder Siedetemperatur können dann den ein oder mehreren identifizierten Geräten mitgeteilt werden (und können von den ein oder mehreren Geräten verwendet werden.

Ferner kann auf Basis der Daten einer Vielzahl von Küchenmaschinen 100, die an einer entsprechenden Vielzahl von unterschiedlichen Aufstellorten angeordnet sind, eine digitale Karte ermittelt werden, die für unterschiedliche Aufstellorte jeweils die Meereshöhe und/oder die Siedetemperatur angibt.

Die ein oder mehreren Auswertealgorithmen, die dazu verwendet werden, die Siedetemperatur zu ermitteln, können (am Backend und/oder in der Küchenmaschine 100) wiederholt optimiert und/oder aktualisiert werden, um die Genauigkeit der Ermittlung der Siedetemperatur und damit die Betriebsgüte der Küchenmaschine 100 zu erhöhen.

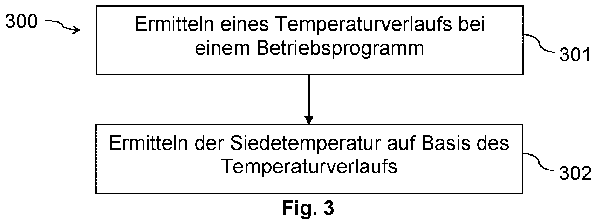

Fig. 3 zeigt ein Ablaufdiagramm eines beispielhaften (ggf. Computer-implementierten) Verfahrens 300 zur Ermittlung der Siedetemperatur (von Wasser) an dem Aufstellort einer Küchenmaschine 100. Die Küchenmaschine 100 umfasst einen Behälter 104 und eine Temperierungseinheit 105 zum Erwärmen des Inhalts des Behälters 104. Des Weiteren umfasst die Küchenmaschine 100 einen Temperatursensor 110, 111 (z.B. einen PTC Sensor und/oder einen IR-Sensor) zum Erfassen von Temperatur-Messwerten 202 in Bezug auf die Temperatur des Inhalts des Behälters 104. Das Verfahren 300 kann durch eine Steuer-Vorrichtung 101 der Küchenmaschine 100 ausgeführt werden. Alternativ oder ergänzend kann das Verfahren 300 durch ein externes Backend (z.B. durch einen externen Server) ausgeführt werden.

Das Verfahren 300 umfasst das Ermitteln 301 eines Temperaturverlaufs 211, 212, wobei der Temperaturverlauf 211, 212 eine zeitliche Sequenz von Temperatur-Messwerten 202 des Temperatursensors 110, 111 umfasst, die während eines Betriebsprogramms der Küchenmaschine 100 erfasst wurden. Dabei kann das Betriebsprogramm zumindest in einem Abschnitt darauf ausgelegt sein, Wasser in dem Behälter 104 zum Kochen zu bringen und für eine bestimmte Zeitdauer (z.B. eine Minute oder mehr, oder 5 Minuten oder mehr) am Kochen zu halten.

Wenn das Verfahren 300 durch die Steuer-Vorrichtung 101 der Küchenmaschine 100 ausgeführt wird, so kann der Temperaturverlauf 211, 212 direkt aus dem Temperatursensor 110, 111 ausgelesen werden. Wenn das Verfahren 300 durch das Backend ausgeführt wird, so kann der Temperaturverlauf 211, 212 von der Küchenmaschine 100 versendet werden, und über eine Kommunikationsverbindung an dem Backend empfangen werden.

Das Verfahren 300 umfasst ferner das Ermitteln 302 der Siedetemperatur an dem Aufstellort der Küchenmaschine 100 auf Basis des Temperaturverlaufs 211, 212. Die Siedetemperatur kann insbesondere (bevorzugt ausschließlich) auf Basis des Teilbereichs des Temperaturverlaufs 211, 212 ermittelt werden, in dem das Wasser kocht und am Kochen gehalten wird.

Es wird somit ein Verfahren 300 beschrieben, das es ermöglicht, automatisch die Siedetemperatur für den Abstellort einer Küchenmaschine 100 zu ermitteln, und anschließend für den Betrieb der Küchenmaschine 100 zu verwenden. So können die Garqualität und die Energieeffizienz der Küchenmaschine 100 erhöht werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Vorrichtung und/oder des vorgeschlagenen Verfahrens veranschaulichen sollen.

## Patentansprüche

1. Vorrichtung (101) zur Ermittlung einer Siedetemperatur an einem Aufstellort einer Küchenmaschine (100), die einen Behälter (104) und eine Temperierungseinheit (105) zum Erwärmen eines Inhalts des Behälters (104), sowie einen Temperatursensor (110, 111) zum Erfassen von Temperatur-Messwerten (202) in Bezug auf eine Temperatur des Inhalts des Behälters (104) umfasst; wobei die Vorrichtung (101) eingerichtet ist,
- einen Temperaturverlauf (211, 212) zu ermitteln, der eine zeitliche Sequenz von Temperatur-Messwerten (202) des Temperatursensors (110, 111) umfasst, die während eines Betriebsprogramms der Küchenmaschine (100) erfasst wurden; und
- die Siedetemperatur an dem Aufstellort der Küchenmaschine (100) auf Basis des Temperaturverlaufs (211, 212) zu ermitteln.

2. Vorrichtung (101) gemäß Anspruch 1, wobei die Vorrichtung (211, 212) eingerichtet ist, einen Temperaturverlauf (211, 212) zu ermitteln, der während eines Betriebsprogramms der Küchenmaschine (100) erfasst wurde, das darauf ausgelegt ist, Wasser in dem Behälter (104) zum Kochen zu bringen und/oder am Kochen zu halten.

3. Vorrichtung (101) gemäß einem der vorhergehenden Ansprüche, wobei die Vorrichtung eingerichtet ist,
- auf Basis von Rezeptdaten für ein Gericht, das in dem Behälter (104) der Küchenmaschine (100) hergestellt wird, einen Abschnitt des Betriebsprogramms zur Herstellung des Gerichts zu identifizieren, bei dem Wasser in dem Behälter (104) durch die Temperierungseinheit (105) zum Kochen gebracht und daraufhin am Kochen gehalten wird;
- zu bewirken, dass der Temperaturverlauf (211, 212) für den identifizierten Abschnitt des Betriebsprogramms erfasst wird; und
- die Siedetemperatur an dem Aufstellort der Küchenmaschine (100) auf Basis des Temperaturverlaufs (211, 212) für den identifizierten Abschnitt des Betriebsprogramms zu ermitteln.

4. Vorrichtung (101) gemäß einem der vorhergehenden Ansprüche, wobei die Vorrichtung eingerichtet ist,
- einen Nutzer der Küchenmaschine (100) zu veranlassen, insbesondere über eine Benutzerschnittstelle (108) der Küchenmaschine (100), ein Siedepunkt-Betriebsprogramm zu starten; wobei im Rahmen des Siedepunkt-Betriebsprogramms,
- der Nutzer aufgefordert wird, Wasser in den Behälter (104) zu füllen; und
- das Wasser durch die Temperierungseinheit (105) zum Kochen gebracht und daraufhin am Kochen gehalten wird;
- zu bewirken, dass der Temperaturverlauf (211, 212) während des Siedepunkt-Betriebsprogramms erfasst wird; und
- die Siedetemperatur an dem Aufstellort der Küchenmaschine (100) auf Basis des Temperaturverlaufs (211, 212) zu ermitteln, der während des Siedepunkt-Betriebsprogramms erfasst wurde.

5. Vorrichtung (101) gemäß einem der vorhergehenden Ansprüche, wobei die Vorrichtung eingerichtet ist,
- einen abgeflachten Bereich des Temperaturverlaufs (211, 212) zu identifizieren, in dem die Temperatur-Messwerte (202) des Temperatursensors (110, 111) um höchstens eine Grenzabweichung, insbesondere um höchstens 10%, voneinander abweichen; und
- die Siedetemperatur auf Basis der Temperatur-Messwerte (202) aus dem abgeflachten Bereich des Temperaturverlaufs (211, 212), insbesondere auf Basis eines Mittelwertes der Temperatur-Messwerte (202) aus dem abgeflachten Bereich des Temperaturverlaufs (211, 212), zu ermitteln.

6. Vorrichtung (101) gemäß einem der vorhergehenden Ansprüche, wobei die Vorrichtung eingerichtet ist,
- einen Zeitpunkt (209) und/oder einen Temperatur-Messwert (202) des Temperaturverlaufs (211, 212) zu identifizieren, ab dem ein Anstieg des Temperaturverlaufs (211, 212) beendet ist; und
- die Siedetemperatur auf Basis von Temperatur-Messwerten (202) des Temperaturverlaufs (211, 212) ab dem identifizierten Zeitpunkt (209) und/oder ab dem identifizierten Temperatur-Messwert (202), insbesondere auf Basis eines Mittelwertes der Temperatur-Messwerte (202) des Temperaturverlaufs (211, 212) ab dem identifizierten Zeitpunkt (209) und/oder ab dem identifizierten Temperatur-Messwert (202), zu ermitteln.

7. Vorrichtung (101) gemäß einem der vorhergehenden Ansprüche, wobei die Vorrichtung eingerichtet ist,
- einen ersten Temperaturverlauf (211) zu ermitteln, der eine zeitliche Sequenz von Temperatur-Messwerten (202) eines ersten Temperatursensors (111) umfasst, die während des Betriebsprogramms der Küchenmaschine (100) erfasst wurden;
- einen zweiten Temperaturverlauf (212) zu ermitteln, der eine zeitliche Sequenz von Temperatur-Messwerten (202) eines zweiten Temperatursensors (110) umfasst, die während des Betriebsprogramms der Küchenmaschine (100) erfasst wurden; und
- die Siedetemperatur an dem Aufstellort der Küchenmaschine (100) auf Basis des ersten Temperaturverlaufs (211) und auf Basis des zweiten Temperaturverlaufs (212) zu ermitteln.

8. Vorrichtung (101) gemäß Anspruch 7, wobei die Vorrichtung (101) eingerichtet ist,
- auf Basis des ersten Temperaturverlaufs (211) einen Zeitpunkt (209) zu identifizieren, ab dem ein Anstieg des ersten Temperaturverlaufs (211) beendet ist und/oder ab dem der erste Temperaturverlauf (211) einen Temperatur-Schwellenwert erreicht und/oder überschreitet; und
- die Siedetemperatur auf Basis von Temperatur-Messwerten (202) des zweiten Temperaturverlaufs (212) ab dem identifizierten Zeitpunkt (209), insbesondere auf Basis eines Mittelwertes der Temperatur-Messwerte (202) des zweiten Temperaturverlaufs (211) ab dem identifizierten Zeitpunkt (209), zu ermitteln.

9. Vorrichtung (101) gemäß einem der Ansprüche 7 bis 8, wobei
- der erste Temperatursensor (111) ein Widerstands-basierter Temperatursensor, insbesondere ein positive-temperature-coefficient Temperatursensor, ist; und/oder
- der zweite Temperatursensor (110) ein Infrarot-basierter Temperatursensor ist.

10. Vorrichtung (101) gemäß einem der vorhergehenden Ansprüche, wobei
- die Vorrichtung eingerichtet ist, die Siedetemperatur anhand einer machine-learning-basierten Ermittlungseinheit auf Basis des ermittelten Temperaturverlaufs (211, 212) zu ermitteln; und
- die Ermittlungseinheit ausgebildet ist, als Eingangsdaten den Temperaturverlauf (211, 212) aufzunehmen und als Ausgangsdaten die Siedetemperatur bereitzustellen.

11. Vorrichtung (101) gemäß einem der vorhergehenden Ansprüche, wobei die Vorrichtung (101) eingerichtet ist,
- ein oder mehrere weitere Geräte zu ermitteln, die in einem Umfeld der Küchenmaschine (100) angeordnet sind; und
- den ein oder mehreren Geräten über eine Kommunikationsverbindung die ermittelte Siedetemperatur bereitzustellen.

12. Vorrichtung (101) gemäß einem der vorhergehenden Ansprüche, wobei die Vorrichtung (101) eingerichtet ist,
- zu bewirken, dass die Küchenmaschine (100) in Abhängigkeit von der ermittelten Siedetemperatur betrieben wird; und/oder
- zu bewirken, dass der Temperatursensor (110, 111) auf Basis der ermittelten Siedetemperatur kalibriert wird.

13. Vorrichtung (101) gemäß einem der vorhergehenden Ansprüche, wobei die Vorrichtung (101) eingerichtet ist,
- die ermittelte Siedetemperatur mit einer gespeicherten Siedetemperatur zu vergleichen, die in einer Speichereinheit der Küchenmaschine (100) gespeichert ist; und
- zu bewirken, dass die ermittelte Siedetemperatur anstelle der gespeicherten Siedetemperatur in der Speichereinheit gespeichert wird, wenn die ermittelte Siedetemperatur um mehr als einen vordefinierten Abweichungs-Schwellenwert von der gespeicherten Siedetemperatur abweicht.

14. Küchenmaschine (100); wobei die Küchenmaschine (100) umfasst,
- einen Behälter (104) zur Aufnahme eines Nahrungsmittels;
- eine Temperierungseinheit (105), die eingerichtet ist, den Behälter (104) und/oder das Nahrungsmittel in dem Behälter (104) zu erwärmen;
- zumindest einen Temperatursensor (110, 111), der eingerichtet ist, Temperatur-Messwerte (202) in Bezug auf eine Temperatur des Behälters (104) und/oder des Nahrungsmittels zu erfassen; und
- eine Vorrichtung (101) gemäß einem der vorhergehenden Ansprüche.

15. Verfahren (300) zur Ermittlung einer Siedetemperatur an einem Aufstellort einer Küchenmaschine (100), die einen Behälter (104) und eine Temperierungseinheit (105) zum Erwärmen eines Inhalts des Behälters (104), sowie einen Temperatursensor (110, 111) zum Erfassen von Temperatur-Messwerten (202) in Bezug auf eine Temperatur des Inhalts des Behälters (104) umfasst; wobei das Verfahren (300) umfasst,
- Ermitteln (301) eines Temperaturverlaufs (211, 212), der eine zeitliche Sequenz von Temperatur-Messwerten (202) des Temperatursensors (110, 111) umfasst, die während eines Betriebsprogramms der Küchenmaschine (100) erfasst wurden; und
- Ermitteln (302) der Siedetemperatur an dem Aufstellort der Küchenmaschine (100) auf Basis des Temperaturverlaufs (211, 212).
